# EUROPEAN PATENT APPLICATION

(11) **EP 1 564 955 A1**
(43) Date of publication of application: **17.08.2005**
(21) Application number: 04250801.0
(22) Date of filing: 16.02.2004
(51) Int. Cl.: H04L 29/06

(54) **Routing protocol device integrated with SIP call server**

(71) Applicant: Zyxel Communications Corporation, Hsin-Chu, Taiwan (TW)
(72) Inventor: Hsiang, Hsu Hung, Jhongjheng District Taipei 100. R.O.C. (TW)
(74) Representative: Dearing-Lambert, Peter Richard

(57) **Abstract**

A routing protocol device integrated with SIP call server. The routing protocol device (1) is provided between a first and a second network systems (2,3). The SIP call server (10) is a Session Initiation Protocol architecture which can be coupled with plurality remote SIP agent client devices (20,30). The routing protocol device (1) includes a first connecting port (11) coupled with the first network system (2), a second connecting port (12) coupled with the second network system (3) and a data packet processing module (13) for executing a routing protocol program (14) to select the data packet transmission path of the first and second network systems (2,3) and for executing at least one SIP servo program. After the remote SIP agent client devices (20,30) perform SIP registry and the locations are linked, an SIP IP phone loop is formed for remote voice telecommunication.

## Description

### BACKGROUND OF THE INVENTION

### 1. Technical Field

The present invention is related to a routing protocol device integrated with SIP call server, and more particularly to an SIP-based network routing protocol device for integrating a SIP call server to a network.

### 2. Description of the Prior Art

The advanced Internet technique leads to more convenient telecommunication. Moreover, the global Internet shortens the distance between peoples and makes it cheaper for people to telecommunicate with each other. For example, voice over Internet protocol (VoIP) technique means voice telecommunication on IP network as using phone. This can save a great deal of calling fee.

The current Internet employs Transmission Control Protocol/Internet Protocol (TCP/IP) as the telecommunication protocol for transmission of data packet on network. Each computer connected to the Internet has a unique IP address so that the data packet can be transmitted to a specified computer. The Internet itself is constructed from many different network systems such as American native network system, internal network systems of universities, etc. The different network systems are interconnected by means of routers. The data packet is transmitted through a plurality of network systems until the data package reaches the destination network system.

The router can select an optimal route among many possible network routes to transmit the data packet according to a routing protocol.. There are two common routing protocols, that is, routing information protocol (RIP) and open shortest path first (OSPF). RIP is applicable to relatively small-size network system, while OSPF is more elastic and applicable to large-size network system. Therefore, most of those devices having routing protocol function are provided at ISP service, station providing broad band connection or data center of large-size company having plurality network connections.

In addition, there is a new protocol, that is, Session Initiation Protocol (SIP) adapted to IP phone derived from broad band network. This protocol is a new technique fully applicable to the integrated environment of Internet and PSTN. SIP is mainly operated in such a manner that the analog voice signal is firstly transmitted from a local telephone to a router and the voice signal is converted and compressed into data packet. Via IP network transmission, the data packet is transmitted to a remote router. The remote router converts the data packet back into the analog voice signal and transmits the voice signal to a telephone. Accordingly, via an open Internet, the remote telecommunication can be performed all over the world without using the conventional public telephone network (PSTN).

The SIP pertains to an application layer protocol in the seven-layer structure of open system interface (OSI) as the client-server structure of HTTP protocol. In packet processing, the commands and states can be transmitted in pure text by means of the read packet data of HTTP. Therefore, the SIP is very suitable for the transmission architecture of wide area network.

In the SIP architecture, at least one SIP call server must be built in addition to the user agent (UA). The call server can serve as a proxy server, location server, registry server, etc. The call server can be combined with the existent PSTN, VoIP, etc.

It can be known from the above that the SIP has advantages including easy integration and reduced telecommunication fee. Therefore, this invention is intended to develop a measure for integrating the SIP call server with the routing protocol device at station end. By means of the present invention, ISP service, IP phone supplier or broad band network supplier can simplify the SIP architecture and save the cost for building SIP call server. In addition, the function of the routing device is enhanced.

### SUMMARY OF THE INVENTION

It is therefore a primary object of the present invention to provide a routing protocol device integrated with an SIP call server. By means of the integrated routing protocol device and SIP call server, the service originally providing routing protocol device at station end can additionally provide SIP network telecommunication function for clients so as to reduce the telecommunication fee of the clients.

According to the above object, the routing protocol device integrated with SIP call server of the present invention is provided between a first and a second network systems. The SIP call server is an SIP architecture which can be coupled with plurality remote SIP agent client devices. The routing protocol device includes a first connecting port coupled with the first network system, a second connecting port coupled with the second network system; and a data packet processing module electrically connected with the first and second connecting ports for executing a routing protocol program to select the data packet transmission path of the first and second network systems and for executing at least one SIP servo program. After the remote SIP agent client devices perform SIP registry and the locations are linked, an SIP phone loop is formed for remote voice telecommunication.

In the routing protocol device, the data packet processing module includes a microprocessor unit and a memory unit. The microprocessor unit mainly serves to execute the routing protocol program and the SIP servo program. The memory unit serves to store the routing protocol program, SIP servo program, the URI of the remote SIP agent client and the data packet to be transmitted.

The present invention can be best understood through the following description and accompanying drawings wherein:

### BRIEF DESCRIPTION OF THE DRAWINGS

Fig. 1 is a block diagram showing that structure the present invention applied to a network;
Fig. 2 is a block diagram showing the functional structure of the routing protocol device of the present invention;
Fig. 3 is a block diagram showing the hardware structure of the routing protocol device of the present invention;
Fig. 4 is a block diagram showing the SIP telecommunication state of the present invention; and
Fig. 5 is a flow chart of the SIP telecommunication of the present invention.

### DETAILED DESCRIPTION OF THE PREFERRED EMBODIMENTS

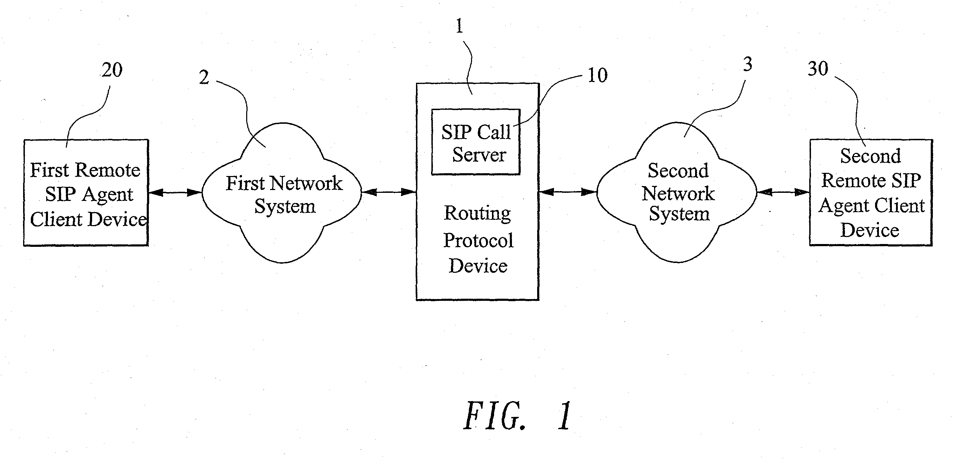

Please refer to Fig. 1. The routing protocol device 1 of the present invention is integrated with an SIP call server 10. The routing protocol device 1 is provided between at least two network systems and has routing protocol function. The routing protocol device 1 can seek an optimal transmission route in the network system for transmitting the data packet. The network system can be at least one Internet or at least one LAN. Each network system can include other small-size network systems. Alternatively, the network system can be coupled with other network systems by means of routers.

In order to facilitate the description of the present invention, the quite complicated network system is simplified into a first network system 2 and a second network system 3. The first network system 2 and second network system 3 can be further coupled with plurality network apparatuses such as enterprise server, network hub, database, computer terminals, etc.

The SIP call server 10 enables the network apparatus (such as IP phone or computer having IP phone function) on the first and second network systems 2, 3 serve to telecommunicate with remote network by voice. Accordingly, the first network system 2 is further coupled with a first remote SIP agent client device 20 and the second network system 3 is further coupled with a second remote SIP agent client device 30.

The first and second remote SIP agent client devices 20, 30 can be a computer having network voice telecommunication function or IP phones. The first and second remote SIP agent client devices 20, 30 mainly serve to convert the voice signal of a user into data packet and transmit the data packet to the remote end. Alternatively, the first and second remote SIP agent client devices 20, 30 serve to convert the data packet transmitted from the remote end into voice signal and transmit the voice signal to the user. Accordingly, the user and the remote end can bidirectionally telecommunicate with each other by voice.

The first and second remote SIP agent client devices 20, 30 can be network hubs, PSTN gateways, VoIP gateways, etc. for connection between respective computers. The network hubs can be connected with several computer mainframes in a LAN. The PSTN gateways can be connected with plurality telephones, facsimiles or PBX. The VoIP gateways can be connected with plurality IP phones.

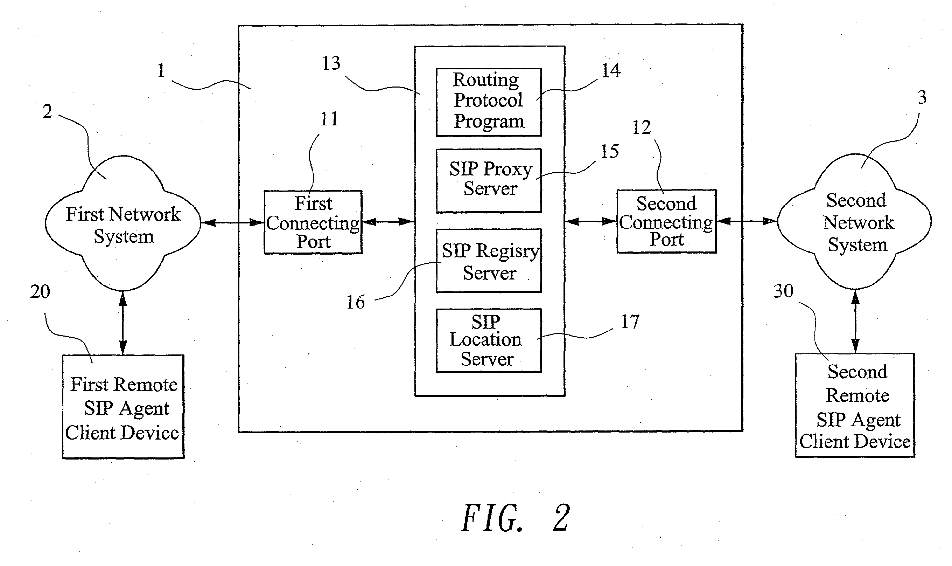

Fig. 2 is a block diagram showing the functional structure of the routing protocol device of the present invention. The routing protocol device 1 has at least one first connecting port 11, at least one second connecting port 12 and a data packet processing module 13. The first connecting port 11 is coupled with the first network system 2 for connecting with the first remote SIP agent client device 20. The second connecting port 12 is coupled with the second network system 3 for connecting with the second remote SIP agent client device 30.

The data packet processing module 13 is electrically connected to the first and second connecting ports 11, 12 for executing at least one routing protocol program 14 and at least one SIP servo program. By executing the routing protocol program 14, the data packet processing module 13 can control to select the data packet transmission path of the first network system 2 via the first connecting port 11 and control to select the data packet transmission path of the second network system 2 via the second connecting port 12.

By executing the SIP servo program, the data packet processing module 13 can be functioned as an SIP proxy server 15, an SIP registry server 16 or an SIP location server 17. The SIP registry server 16 enables the first and second remote SIP agent client devices 20, 30 to perform SIP registry so as to store the SIP URI of the remote SIP agent clients.

The proxy server 15 serves to transmit the INVITE asking sent from the remote SIP agent client device so as to perform voice phone call. For example, the first remote SIP agent client device 20 can call the second remote SIP agent client device 30.

The location server 17 serves to seek the location of the remote SIP agent client device and convert the location into URI of the remote SIP agent client device. Accordingly, the first and second remote SIP agent client devices 20, 30 can directly bidirectionally telecommunicate with each other by voice.

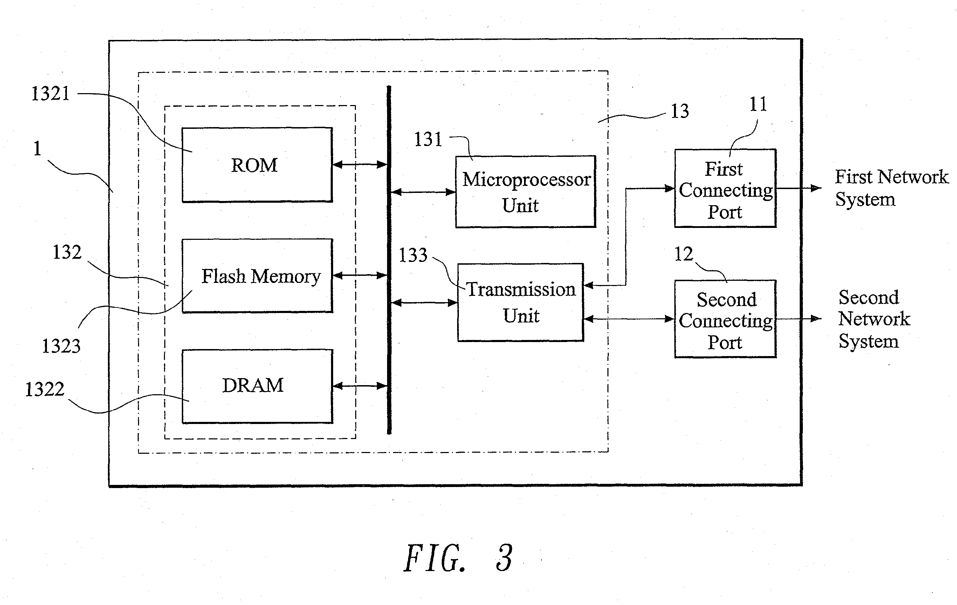

Fig. 3 is a block diagram showing the hardware structure of the routing protocol device of the present invention. The hardware structure of the data packet processing module 13 of the routing protocol device 1 mainly includes a microprocessor unit 131, a memory unit 132 and plurality transmission units 133. The microprocessor unit 131 mainly serves to execute the routing protocol program 14 and the SIP servo program.

The memory unit 132 is electrically connected with the microprocessor unit 131. The memory unit 132 includes an ROM 1321 for storing the routing protocol program 14 and the SIP servo program to be executed. The memory unit 132 also can be a DRAM 1322 for temporarily storing the data packet to be transmitted or a flash memory 1323 for storing the SIP URI of the remote SIP agent client.

The transmission units 133 are used to bridge the digital signal between the first connecting port 11 (or the second connecting port 12) and the microprocessor unit 131.

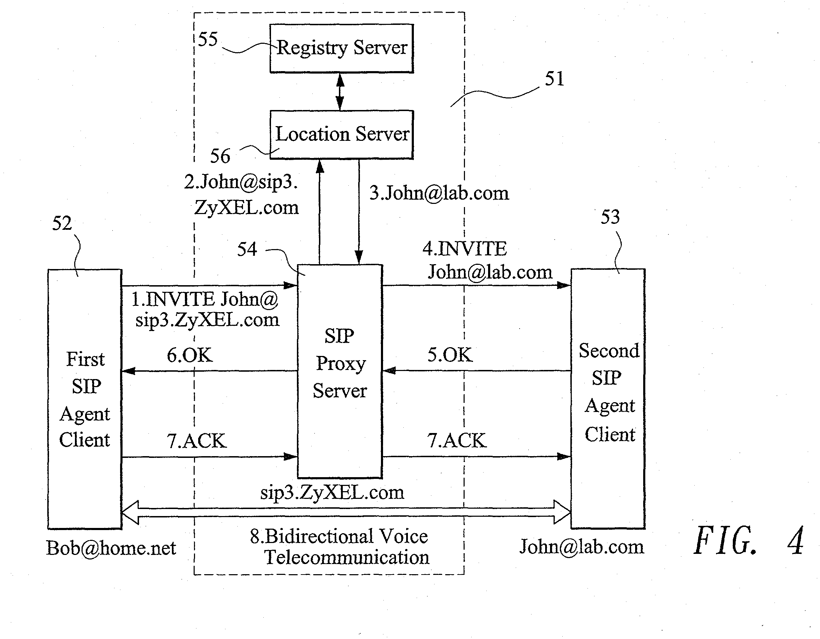

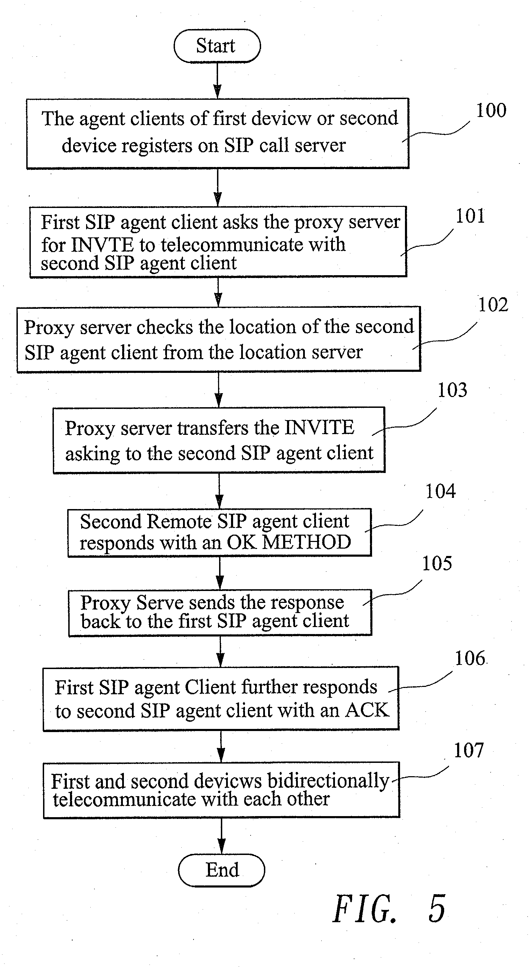

Fig. 4 is a block diagram showing the SIP telecommunication state of the present invention and Fig. 5 is a flow chart of the SIP telecommunication of the present invention. A system for SIP telecommunication mainly includes an SIP server 51, a first SIP agent client 52 and a second SIP agent client 53. The SIP server 51 can be an SIP proxy server 54, an SIP registry server 55, an SIP location server 56, etc. Different servers can be combined according to required functions.

The first and second SIP agent clients 52, 53 both execute SIP agent client program or are directly connected with an IP phone for compressing and converting the voice signal of the user into data packet or decompressing and converting the data packet into voice signal for bidirectional voice telecommunication.

Before performing telecommunication by voice, both the first and second SIP agent clients 52, 53 must first register their own SIP URI and IP location on the SIP registry server 55 (step 100). The SIP URI is the only way for the SIP server 51 to identify every SIP agent clients 52, 53. As shown in Fig. 4, after registered, the SIP URI of the first SIP agent client 52 is assumed to be Bob@sip3.ZyXEL.com, while the SIP URI of the second SIP agent client 53 is assumed to be John@sip3.ZyXEL.com.

When the first SIP agent client 52 wants to telecommunicate with the second SIP agent client 53, the first SIP agent client 52 first asks the SIP proxy server 54 of the SIP server 51 for INVITE (step 101). The SIP proxy server 54 will check the location of the second SIP agent client 53 from the SIP location server 56. After the SIP proxy server 54 identifies the location of the second SIP agent client 53 (step 102), the INVITE asking is transferred to the second SIP agent client 53 (step 103).

After the second SIP agent client 53 receives this asking, if agreeing to telecommunicate with the first SIP agent client 52, the second SIP agent client 53 will respond with an OK METHOD (step 104). After the SIP proxy server 54 receives the response, the SIP proxy server 54 will send the response back to the first SIP agent client 52 (step 105). At this time, the first SIP agent client 52 will further respond to the second SIP agent client 53 with an ACK to indicate reception of " OK " (step 106). Then, the user of the first SIP agent client 52 can bidirectionally telecommunicate with the user of the second SIP agent client 53 by voice (step 107). At this time, the service of the SIP server 51 is no longer required and the INVITE asking of other users can be satisfied.

Therefore, the SIP server 51 is simply in charge of INVITE asking and the work of location search and conversion. The telecommunication work is totally given to IP data packet. Therefore, the load of the SIP server 51 is not heavy so that the SIP server 51 can be integrated with the routing protocol device 1. Accordingly, the function of the routing protocol device 1 is enhanced and the architecture of the SIP network telecommunication is simplified to save the cost for the SIP server and greatly reduce the telecommunication fee of the clients.

The above embodiments are only used to illustrate the present invention, not intended to limit the scope thereof. Many modifications of the above embodiments can be made without departing from the spirit of the present invention.

## Claims

1. A routing protocol device integrated with SIP call server, the routing protocol device (1) being provided between a first and a second network systems (2,3), the SIP call server (10) being an Session Initiation Protocol architecture which can be coupled with plurality remote SIP agent client devices (20,30), the routing protocol device (1) comprising:
a first connecting port (11) coupled with the first network system (2);
a second connecting port (12) coupled with the second network system (3); and
a data packet processing module (13) electrically connected to the first and second connecting ports (11,12) for executing:
a routing protocol program (14) to select the data packet transmission path of the first and second network systems (2,3); and
at least one SIP servo program, whereby after the remote SIP agent client devices (20, 30) perform SIP registry and the locations are linked, an SIP IP phone loop is formed for remote voice telecommunication.

2. The routing protocol device as claimed in claim 1, wherein the first and second network systems (2,3) are Internets or LAN.

3. The routing protocol device as claimed in claim 1, wherein the first network system (2) is coupled with a first remote SIP agent client device (20), while the second network system (3) is coupled with a second remote SIP agent client device (30).

4. The routing protocol device as claimed in claim 3, wherein the first and second remote SIP agent client devices (20,30) are computer mainframes or IP phones for converting voice signal into digital signal or converting digital signal into voice signal for bidirectional voice telecommunication.

5. The routing protocol device as claimed in claim 1, wherein the remote SIP agent client device (20,30) is a computer mainframe, a network hub, an IP phone gateway or a PSTN gateway.

6. The routing protocol device as claimed in claim 1, wherein by means of executing the routing protocol program (14), the data packet processing module (13) selects the data packet transmission path of the first network system (2) via the first connecting port (11).

7. The routing protocol device as claimed in claim 1, wherein by executing the routing protocol program (14), the data packet processing module (13) selects the data packet transmission path of the second network system (3) via the second connecting port (12).

8. The routing protocol device as claimed in claim 1, wherein by executing the SIP servo program, the data packet processing module (13) forms an SIP proxy server (15), an SIP registry server (16) or an SIP location server (17).

9. The routing protocol device as claimed in claim 8, wherein the SIP registry server (16) enables the remote SIP agent client devices (20,30) to perform SIP registry so as to store the SIP URI of the remote SIP agent clients.

10. The routing protocol device as claimed in claim 8, wherein the SIP proxy server (15) serves to transmit the INVITE asking sent from the remote SIP agent client device (20,30) so as to perform voice phone call.

11. The routing protocol device as claimed in claim 8, wherein the location server (17) serves to seek the location of the remote SIP agent client device (20,30) and convert the location into SIP URI of the remote SIP agent client, whereby the remote SIP agent client devices (20,30) can directly bidirectionally telecommunicate with each other by voice.

12. The routing protocol device as claimed in claim 1, wherein the data packet processing module (13) includes:
a microprocessor unit (131) mainly serving to execute the routing protocol program (14) and the SIP servo program; and
a memory unit (132) electrically connected with the microprocessor unit (131) for storing at least one executed program, the URI of the remote SIP agent client and the data packet to be transmitted.

13. The routing protocol device as claimed in claim 12, wherein the memory unit (132) is an ROM (1321), a DRAM (1322) or a flash memory (1323).
